# EUROPÄISCHE PATENTSCHRIFT

(11) **EP 1 890 019 B1**
(45) Veröffentlichungstag und Bekanntmachung des Hinweises auf die Patenterteilung: **24.06.2009**
(21) Anmeldenummer: 07013632.0
(22) Anmeldetag: 12.07.2007
(51) Int. Cl.: F01P 11/10, F01P 7/12, B60K 11/08

(54) **Kraftfahrzeug mit Kühlvorrichtung**
Motor vehicle with cooling assembly
Véhicule automobile avec dispositif de refroidissement

(30) Priorität: 09.08.2006 DE 102006037354
(43) Veröffentlichungstag der Anmeldung: 20.02.2008
(73) Patentinhaber: Behr GmbH & Co. KG, 70469 Stuttgart (DE)
(72) Erfinder: Vollert, Ulrich, 70567 Stuttgart (DE)
(74) Vertreter: Grauel, Andreas

(56) Entgegenhaltungen:
- EP-A- 0 535 255
- DE-A1- 3 322 338
- DE-A1- 19 645 091
- DE-C1- 3 446 950
- US-A- 5 193 608

## Beschreibung

Die Erfindung betrifft ein Kraftfahrzeug nach dem Oberbegriff des Patentanspruches 1.

Bekannte Kühlvorrichtungen für Kraftfahrzeuge umfassen mindestens einen Wärmeübertrager, z. B. einen Kühlmittelkühler, einen Lüfter, sowie eine zwischen Lüfter und Wärmeübertrager angeordnete Luftleiteinrichtung, auch Lüfterhaube oder Lüfterzarge genannt. Die Luftleiteinrichtung schließt einerseits an die Rückseite des Wärmeübertragers an und weist andererseits einen Zargenring auf, in welchen der Lüfter umläuft. Die aus dem Lüfter austretende Kühlluft, d. h. die Abluft trifft auf die hinter dem Lüfter angeordnete Brennkraftmaschine und gelangt von dort ins Freie. Bei hohen Fahrzeuggeschwindigkeiten baut sich innerhalb der Lüfterzarge vor dem Lüfter ein Überdruck auf, wobei der Lüfter "überblasen" wird und somit als Drossel für den Kühlluftstrom wirkt. Für diesen Fall hat man bereits so genannte Staudruckklappen vorgeschlagen, d. h. selbsttätig unter der Wirkung des Staudruckes gegen eine Rückstellfeder oder gegen die Schwerkraft öffnende Klappen, welche eine Bypassöffnung - zusätzlich zu der Lüfteröffnung - freigeben und somit einen zusätzlichen Luftausgang schaffen. Dadurch werden der Kühlluftdurchsatz durch den Kühler und damit die Kühlleistung erhöht. Der Lüfter kann abgeschaltet werden oder läuft mit geringerer Leistung, wodurch gleichzeitig Energie gespart wird.

Durch die DE-A 24 39 033 wurde eine Kühlvorrichtung, bestehend aus einem Kühler, einer Kühler- bzw. Lüfterzarge sowie einem Lüfter, bekannt, welcher Kühlluft durch den Kühler fördert. In der Lüfterzarge sind beiderseits der Lüfteröffnung fensterartige Öffnungen vorgesehen, welche durch federbelastete Klappen, d. h. Rückstellklappen bei Überdruck in der Lüfterzarge, d. h. bei erhöhtem Staudruck freigegeben werden. Die über diese Bypassöffnungen austretende Luft erhöht den Kühlluftdurchsatz und verbessert somit die Kühlung.

Durch die DE 42 38 679 A1 der Anmelderin wurde eine Kühlvorrichtung mit einer Luftleiteinrichtung und Staudruckklappen für Kraftfahrzeuge bekannt. Die Staudruckklappen sind ebenfalls als Rückstellklappen ausgebildet, wobei die Rückstellfeder in die Staudruckklappe integriert, d. h. einstückig mit dieser ausgebildet ist.

Durch die DE 20 2004 010 030 U1 wurde ein Frontend für Kraftfahrzeuge mit einem Montageträger bekannt, wobei eine Lüfterzarge Teil des Montageträgers ist und Durchlassöffnungen zur Aufnahme von Staudruckklappen aufweist.

Eine weitere Kühlvorrichtung mit einer Luftleiteinrichtung ist aus DE 33 22 338 A bekannt.

Nachteilig bei den bekannten Kühlvorrichtungen ist, dass der austretende Kühlluftstrom, d. h. die Abluft nicht ungehindert abströmen kann, sondern auf eine relativ zerklüftete Struktur im Motorraum trifft, wodurch der Kühlluftdurchsatz beeinträchtigt wird. Dies trifft insbesondere für gekapselte Brennkraftmaschinen zu, was heute, auch bei Nutzfahrzeugen, häufig der Fall ist.

Es ist Aufgabe der vorliegenden Erfindung, eine Kühlvorrichtung der eingangs genannten Art in ihrer Wirksamkeit zu verbessern, insbesondere den Kühlluftdurchsatz energiesparend zu erhöhen.

Diese Aufgabe wird durch die Merkmale des Patentanspruches 1 gelöst. Vorteilhafte Ausgestaltungen der Erfindung ergeben sich aus den Unteransprüchen.

Erfindungsgemäß ist vorgesehen, dass die Luftleiteinrichtung über eine oder mehrere Luftführungen in Strömungsverbindung mit dem Unterbodenbereich des Fahrzeuges steht. Die Erfindung geht von der Erkenntnis aus, dass sich im Unterbodenbereich eines Kraftfahrzeuges bei Erreichen bestimmter Fahrgeschwindigkeiten ein Unterdruckbereich ausbildet (vgl. W.-H. Hucho, Aerodynamik des Automobils, 2005, 5. Auflage). Die erfindungsgemäßen Luftführungen münden in diesen Unterdruckbereich, sodass sich ein Sog ergibt, der zu einem vorzeitigen Öffnen der Staudruckklappe, welche sich in der Lüftführung befindet, führt. Der Lüfter kann somit früher abgeschaltet oder mit reduzierter Leistung betrieben werden, was zu einer Energieeinsparung führt. Bei gleicher Fahrgeschwindigkeit kann eine höhere Kühlleistung erzielt werden. Bei geöffneter Staudruckklappe ergibt sich wegen des höheren Druckgefälles zwischen dem Staudruck in der Lüfterzarge und dem Unterdruck im Unterbodenbereich ein höherer Kühlluftdurchsatz durch den Wärmeübertrager. Darüber hinaus sinkt der Überdruck im Abströmbereich des Lüfters, wodurch sich der Lüfterdurchsatz erhöht.

Die Kühlvorrichtung umfasst mindestens einen Wärmeübertrager, der als Kühlmittel/Luft-Kühler ausgebildet ist und vom Kühlmittel der Brennkraftmaschine durchströmt wird. Zusätzlich zu dem Kühlmittelkühler können weitere Wärmeübertrager wie ein Ladeluftkühler, ein Kältemittelkondensator sowie ein Ölkühler vorgesehen sein, welche zu einer Baueinheit, einem so genannten Kühlmodul, verbunden und im vorderen Motorraum angeordnet sind.

Die Luftführung ist als Luftkanal ausgebildet, welcher sich zwischen der Luftleiteinrichtung (Lüfterzarge) und dem Unterbodenbereich erstreckt. Dabei kann der Lufteintritt des Luftkanals vorteilhaft im unteren Bereich der Lüfterzarge angeordnet sein.Die Staudruckklappe befindet sich innerhalb des Luftkanals. Um eine maximale Sogwirkung zu erzielen, ist es vorteilhaft, das Austrittsende bzw. die Mündung des Luftkanals im Bereich des stärksten Unterdruckes anzuordnen.

Um den Saugeffekt weiter zu erhöhen, ist es von Vorteil, die Mündung des Luftkanals diffusorartig zu erweitern, d. h. die Luftströmung am Austritt zu verzögern.

Weiterhin kann es vorteilhaft sein, eine Aufteilung des Luftkanals in mehrere Luftkanäle mit Staudruckklappen vorzusehen, die jeweils in das Unterdruckgebiet im Unterbodenbereich münden.

Vorteilhaft ist auch ein zusätzlicher Luftkanal, der direkt an die Rückseite des Wärmeübertragers bzw. Kühlers anschließt und - getrennt von dem oder den übrigen Luftkanälen - in das Unterdruckgebiet im Unterbodenbereich führt. Ein derartiger zusätzlicher Luftkanal benötigt keine Stauluftklappe.

Die Erfindung ist vorteilhaft bei Nutzfahrzeugen anwendbar, wobei die Kühlvorrichtung vorteilhaft unter der Fahrerkabine, d. h. im Unterflurbereich angeordnet ist. Hier ergeben sich günstige Voraussetzungen für die Anordnung der erfindungsgemäßen Luftführung in den Unterdruckbereich des Fahrzeuges im Unterbodenbereich.

Ausführungsbeispiele der Erfindung sind in der Zeichnung dargestellt und werden im Folgenden näher beschrieben. Es zeigen
- Fig. 1: eine Kühlvorrichtung für ein Kraftfahrzeug mit erfindungsgemäßem Luftkanal,
- Fig. 2: ein weiteres Ausführungsbeispiel der Erfindung mit zwei versetzt angeordneten Luftkanälen,
- Fig. 3: eine Kühlvorrichtung mit einem zusätzlichen Luftkanal und
- Fig. 4: ein Diagramm für den Kühlluftstrom, aufgetragen über der Fahrzeuggeschwindigkeit.

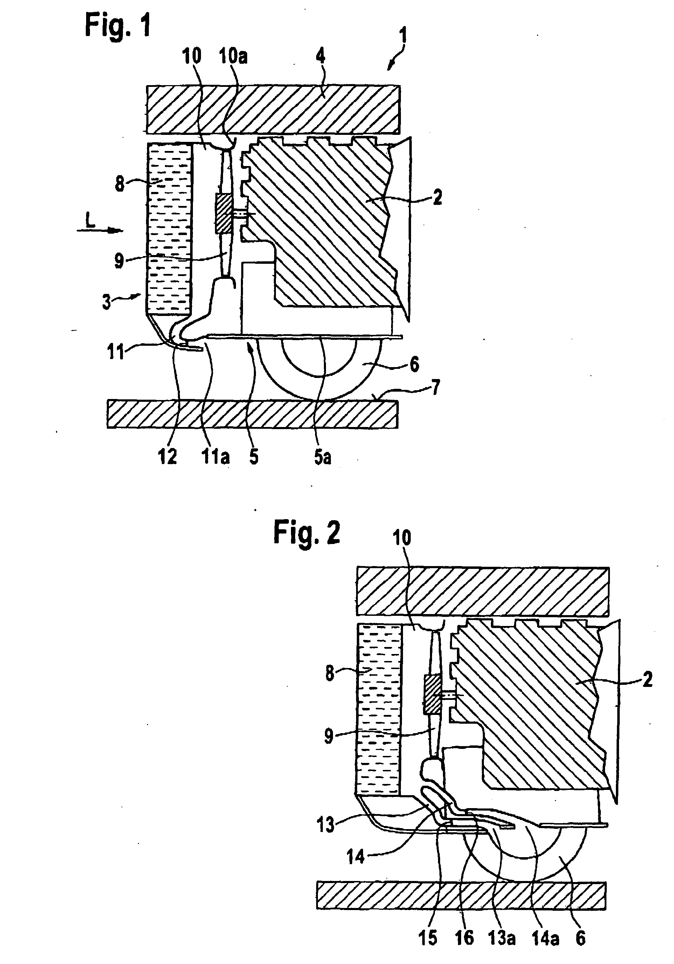

**Fig. 1** zeigt einen vorderen Ausschnitt eines Kraftfahrzeuges 1 mit einer Brennkraftmaschine 2 und einer Kühlvorrichtung 3, welche, in Fahrtrichtung des Kraftfahrzeuges 1 gesehen, vor der Brennkraftmaschine 2 angeordnet ist. Das Kraftfahrzeug 1 ist als Nutzfahrzeug ausgebildet und weist oberhalb der Brennkraftmaschine 2 eine Fahrerkabine 4 auf. Unterhalb der Brennkraftmaschine 2 befindet sich der Unterbodenbereich 5 des Fahrzeuges 1 sowie die Vorderräder 6, welche auf der Fahrbahn 7 stehen. Die Kühlvorrichtung 3 umfasst eine aus verschiedenen nicht dargestellten Wärmeübertragern bestehende Baueinheit 8, auch Kühlmodul genannt, wobei das Kühlmodul aus einem Kühlmittelkühler, einem Ladeluftkühler, einem Kondensator und/oder einem Motor- und Getriebeölkühler bestehen kann. Das gesamte Kühlmodul 8 wird von Umgebungsluft bzw. vom Fahrtwind, gekennzeichnet durch einen Pfeil L, durchströmt. In Strömungsrichtung hinter dem Kühlmodul 8 ist ein Lüfter 9, ausgebildet als Axiallüfter, angeordnet, welcher direkt oder mittelbar (über eine nicht dargestellte Kupplung) von der Brennkraftmaschine 2 angetrieben wird. Zwischen Kühlmodul 8 und Lüfter 9 ist eine Luftleiteinrichtung 10 angeordnet, welche sich im Wesentlichen von der stromabwärtigen Seite des Kühlmoduls 8 bis zum Lüfter 9 erstreckt und diesen mittels eines Zargenringes 10a umschließt. Die Brennkraftmaschine 2 ist gekapselt, was durch eine Bodenwand 5a angedeutet ist. Im unteren Bereich der Luftleiteinrichtung 10, im Folgenden auch Lüfterzarge genannt, zweigt ein Luftführungskanal, im Folgenden kurz Luftkanal 11 genannt, ab, in welchem eine als Staudruckklappe fungierende Rückschlagklappe 12 angeordnet ist, welche durch eine Rückstellfeder oder durch Schwerkraft in ihre Schließposition zurückgestellt werden kann. Der Luftkanal 11 weist eine Austrittsöffnung 11a auf, welche in den Unterbodenbereich 5 des Fahrzeuges 1 vor den Vorderrädern 6 mündet. Mit Unterbodenbereich 5 ist der Bereich des Fahrzeuges zwischen Unterbodenverkleidung und Fahrbahn 7 zu verstehen, in welchem sich infolge Fahrtwindes ein Unterdruckbereich ausbildet. Mit diesem Unterdruckbereich kommuniziert der Innenraum der Luftleiteinrichtung 10 über den Luftkanal 11 bei geöffneter Staudruckklappe 12. Die Staudruckklappe 12 öffnet, wenn die aus Staudruck und Unterdruck resultierende Kraft auf die Rückstellklappe 12 größer als deren Rückstellkraft ist.

Die Kühlvorrichtung 3 wird wie folgt betrieben: Bei höheren Fahrgeschwindigkeiten und nicht zugeschaltetem Lüfter 9 durchströmt die Kühlluft (Stauluft) das Kühlmodul 8, tritt in die Luftleiteinrichtung 10 ein und verlässt diese einerseits über die Lüfteröffnung, d. h. den Zargenring 10a und andererseits - bei geöffneter Staudruckklappe 12 - über den Luftkanal 11, der in den Unterbodenbereich 5 führt. Der Luftkanal 11 wirkt als Bypass zur Lüfteröffnung, sodass sich der Gesamtkühlluftstrom erhöht. Zusätzlich tritt eine Erhöhung des Kühlluftstromes infolge des erfindungsgemäß vergrößerten Druckgefälles zwischen dem Staudruck in der Luftleiteinrichtung 10 und dem Unterdruck im Unterbodenbereich 5 ein.

Bei zugeschaltetem Lüfter 9, d. h. bei geringen Fahrgeschwindigkeiten und demzufolge geringem Staudruck ist die Staudruck- bzw. Rückschlagklappe 12 geschlossen, d. h. der Lüfter 9 kann über den Luftkanal 11 keine Luft ansaugen. Bei höherer Fahrgeschwindigkeit steigt der Staudruck, die Staudruckklappe 12 öffnet, und der Bypasskanal 11 wird freigegeben.

**Fig. 2** zeigt ein weiteres Ausführungsbeispiel der Erfindung, wobei für gleiche Teile gleiche Bezugszahlen verwendet werden. Im Unterschied zum Ausführungsbeispiel gemäß Fig. 1 sind in Fig. 2 zwei in Fahrtrichtung gegeneinander versetzt angeordnete Luftkanäle 13, 14 mit Austrittsöffnungen 13a, 14a vorgesehen, welche im Bereich des Vorderrades 6 angeordnet sind. In beiden Luftkanälen 13,14 sind Staudruck- bzw. Rückstellklappen 15, 16 angeordnet. Der Luftkanal 11 gemäß Ausführungsbeispiel nach Fig. 1 ist somit in zwei Luftkanäle 13, 14 gemäß Fig. 2 aufgeteilt. Die Austrittsöffnungen bzw. Austrittsbereiche 13a, 14a sind diffusorartig erweitert, sodass sich eine Verzögerung der Luftströmung ergibt, was eine Steigerung des Kühlluftdurchsatzes bewirkt.

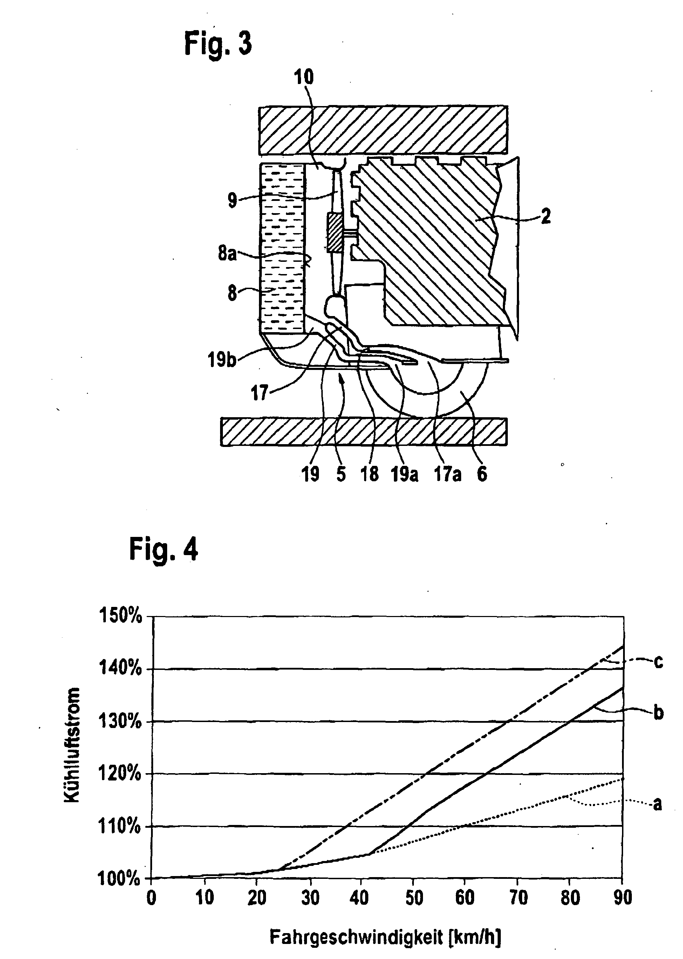

**Fig. 3** zeigt ein weiteres Ausführungsbeispiel der Erfindung, wobei wiederum für gleiche Teile gleiche Bezugszahlen verwendet werden. Von der Luftleiteinrichtung 10 zweigt ein Luftkanal 17 ab, welcher mit seiner Austrittsöffnung 17a im Bereich des Vorderrades 6 mündet und eine Staudruckklappe 18 aufweist. In Fahrtrichtung vor dem Luftkanal 17 ist ein zusätzlicher Luftkanal 19 angeordnet, welcher eine Austrittsöffnung 19a im Unterbodenbereich 5 und eine Eintrittsöffnung 19b aufweist, welche direkt an die stromabwärtige Seite 8a des Kühlmoduls 8 anschließt. Der Luftkanal 19, insbesondere sein Einrittsbereich 19b ist somit vom Innenraum der Luftleiteinrichtung 10 abgetrennt; er weist auch keine Staudruckklappe auf. Der den unteren Bereich des Kühlmoduls 8 durchströmende und in die Eintrittsöffnung 19b eintretende Kühlluftstrom gelangt somit direkt in den Unterbodenbereich 5 des Fahrzeuges.

**Fig. 4** zeigt ein Diagramm, in welchem die Abhängigkeit des Kühlluftstromes über der Fahrgeschwindigkeit des Fahrzeuges aufgetragen ist. Das Diagramm enthält drei Kurven, nämlich eine untere gestrichelte Kurve a, eine mittlere durchgezogene Kurve b und eine obere lang und kurz gestrichelte Kurve c. Die Kurve a mit dem geringsten Kühlluftdurchsatz (120 % bei 90 km/h) entspricht einer Kühlvorrichtung nach dem Stand der Technik ohne Staudruckklappen. Die durchgezogene Kurve b entspricht einer Kühlvorrichtung nach dem Stand der Technik mit Staudruckklappen. Die oberste Kurve c entspricht der erfindungsgemäßen Kühlvorrichtung mit Staudruckklappen und erfindungsgemäßen Luftkanälen, welche in das Unterdruckgebiet im Unterbodenbereich münden. Durch die erfindungsgemäße Unterbodenabsaugung ergibt sich ein deutlich erhöhter Kühlluftdurchsatz ab einer Fahrgeschwindigkeit von ca. 25 km/h. Wie aus der Darstellung ersichtlich, ist die der Erfindung entsprechende Kurve c gegenüber der Kurve b nach dem Stand der Technik um ca. 10 km/h nach links verschoben, d. h. entsprechend früher kann der Lüfter ausgeschaltet oder mit reduzierter Leistung betrieben werden, was eine Energieeinsparung bedeutet. Bei gleicher Fahrgeschwindigkeit erhöht sich die Kühlleistung.

## Patentansprüche

1. Kraftfahrzeug mit einer Brennkraftmaschine (2) und mit einer Kühlvorrichtung (3), wobei die Kühlvorrichtung (3) mindestens einen Wärmeübertrager (8), einen Lüfter (9) und eine Luftleiteinrichtung (10) mit mindestens einer durch eine Staudruckklappe kontrollierbaren Bypassöffnung und das Kraftfahrzeug (1) einen Unterbodenbereich (5) aufweisen, wobei die Bypassöffnung mit einer Luftführung (11, 13, 14, 17) verbunden ist, die in den Unterbodenbereich (5) des Fahrzeuges (1) mündet, **dadurch gekennzeichnet, dass** die Luftführung als mindestens ein Luftkanal (11, 13, 14, 17) ausgebildet ist, der stromaufwärts mit der Luftleiteinrichfiung (10) und stromabwärts mit dem Unterbodenbereich (5) in Strömungsverbindun steht und wobei die Staudruckklappen (12, 15, 16, 18) innerhalb der Luftkanälen (11, 13, 14, 17) angeordnet sind.

2. Kraftfahrzeug nach Anspruch 1, **dadurch gekennzeichnet, dass** die mindestens eine Bypassöffnung im unteren, d. h. dem dem Unterbodenbereich (5) benachbarten Bereich der Luftleiteinrichtung (10) angeordnet ist.

3. Kraftfahrzeug nach Anspruch 1 oder 2, **dadurch gekennzeichnet, dass** ein zusätzlicher Luftkanal (19, 19a, 19b) vorgesehen ist, der unmittelbar an einen Teil des Wärmeübertragers (8) anschließt und in den Unterbodenbereich (5) mündet.

4. Kraftfahrzeug nach einem der Ansprüche 1 bis 3, **dadurch gekennzeichnet, dass** der mindestens eine Luftkanal (13, 13a; 14, 14a; 17, 17a) in den in Fahrtrichtung vom liegenden Unterbodenbereich (5), insbesondere in den Bereich der Vorderräder (6) des Fahrzeuges (1) mündet.

5. Kraftfahrzeug nach einem der Ansprüche 1 bis 4, **dadurch gekennzeichnet, dass** der stromabwärtige Bereich (11a, 13a, 14a, 17a) des mindestens einen Luftkanals (11, 13, 14, 17) diffusorartig erweitert ist.

6. Kraftfahrzeug nach einem der vorhergehenden Ansprüche, **dadurch gekennzeichnet, dass** das Kraftfahrzeug (1) als Nutzfahrzeug mit einer Fahrerkabine (4) ausgebildet und dass die Kühlvorrichtung (3) unterhalb der Fahrerkabine (4) angeordnet ist.

## Claims

1. Motor vehicle with an internal combustion engine (2) and with a cooling assembly (3), said cooling assembly (3) comprising at least one heat exchanger (8), a fan (9) and an air guide system (10) with at least one bypass opening that can be controlled by a dynamic pressure valve, the motor vehicle (1) having an underfloor space (5), such that the bypass opening is connected to an air guide (11, 13, 14, 17) which opens into the said underfloor space (5) of the vehicle (1), **characterised in that** the air guide (11, 13, 14, 17) is formed as at least one air duct (11, 13, 14, 17), which is in flow connection upstream with the air guide system (10) and downstream with the underfloor space (5), and such that the dynamic pressure valves (12, 15, 16, 18) are arranged inside the air ducts (11, 13, 14, 17).

2. Motor vehicle according to Claim 1, **characterised in that** the at least one bypass opening is positioned in the lower part of the air guide system (10), i.e. in its area near the underfloor space (5).

3. Motor vehicle according to Claims 1 or 2, **characterised in that** an additional air duct (19, 19a, 19b) is provided, which is connected directly to part of the heat exchanger (8) and which opens into the underfloor space (5).

4. Motor vehicle according to any of Claims 1 to 3, **characterised in that** the at least one air duct (13, 13a; 14, 14a; 17, 17a) opens into the underfloor space (5) at the front in the driving direction, in particular in the area of the front wheels (6) of the vehicle (10.

5. Motor vehicle according to any of Claims I to 4, **characterised in that** the downstream area (11a, 13a, 14a, 17a) of the at least one air duct (11, 13, 14, 17) is expanded in the manner of a diffuser.

6. Motor vehicle according to any of the preceding claims, **characterised in that** the motor vehicle (1) is a utility vehicle with a driver's cabin (4), and the cooling assembly (3) is located under the said driver's cabin (4).

## Revendications

1. Véhicule automobile à moteur à combustion interne (2) et comprenant un dispositif de refroidissement (3) où le dispositif de refroidissement (3) présente au moins un échangeur de chaleur (8), un ventilateur (9) et un dispositif déflecteur d'air (10) comportant au moins une ouverture de dérivation contrôlable par un volet de pression dynamique, et le véhicule automobile (1) présente une zone de dessous de caisse (5), où l'ouverture de dérivation est raccordée à un guidage d'air (11, 13, 14, 17) qui débouche dans la zone du dessous de caisse (5) du véhicule (1),
**caractérisé en ce que** le guidage d'air est conçu comme au moins un conduit d'air (11, 13, 14, 17) qui se trouve, dans la direction d'écoulement, en amont du dispositif déflecteur d'air (10) et en aval de la zone du dessous de caisse (5), et où les volets de pression dynamique (12, 15, 16, 18) sont disposés à l'intérieur des conduits d'air (11, 13, 14, 17).

2. Véhicule automobile selon la revendication 1, **caractérisé en ce que** l'ouverture de dérivation au moins au nombre de un est disposée dans la zone inférieure du dispositif déflecteur d'air (10), c'est-à-dire située à proximité de la zone du dessous de caisse (5).

3. Véhicule automobile selon la revendication 1 ou 2, **caractérisé en ce qu'**il est prévu un conduit d'air supplémentaire (19, 19a, 19b) qui est raccordé directement à une partie de l'échangeur de chaleur (8) et débouche dans la zone du dessous de caisse (5).

4. Véhicule automobile selon l'une quelconque des revendications 1 à 3, **caractérisé en ce que** le conduit d'air au moins au nombre de un (13, 13a ; 14, 14a ; 17, 17a) débouche dans la zone du dessous de caisse (5) placée à l'avant dans le sens de la marche, en particulier dans la zone des roues avant (6) du véhicule (1).

5. Véhicule automobile selon l'une quelconque des revendications 1 à 4, **caractérisé en ce que** la zone (11a, 13a, 14a, 17a) située en aval du conduit d'air (11, 13, 14, 17) au moins au nombre de un est élargie en forme de diffuseur.

6. Véhicule automobile selon l'une quelconque des revendications précédentes, **caractérisé en ce que** le véhicule automobile (1) est conçu comme un véhicule utilitaire comprenant une cabine de conducteur (4), et **en ce que** le dispositif de refroidissement (3) est disposé au-dessous de la cabine de conducteur (4).
